# EUROPEAN PATENT APPLICATION

(11) **EP 4 116 309 A1**
(43) Date of publication of application: **11.01.2023**
(21) Application number: 21184297.6
(22) Date of filing: 07.07.2021
(51) Int. Cl.: C07F 9/30, C08K 5/5313, C09K 21/12

(54) **SUSTAINABLY PRODUCED DIALKYLPHOSPHINIC SALTS**

(71) Applicant: Clariant International Ltd, 4132 Muttenz (CH)
(72) Inventor: BAUER, Harald, 50170 Kerpen (DE); SICKEN, Martin, 51149 Köln (DE); SCHMITT, Elmar, 65597 Huenfelden (DE)
(74) Representative: Jacobi, Carola

(57) **Abstract**

The invention provides sustainably produced dialkylphosphinic salts of the formula (I) 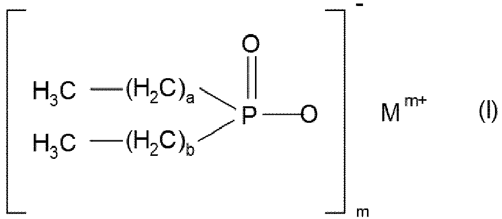 in which
a and b
may be the same or different and are each independently 1 to 9, and where the carbon chains may be linear, branched or cyclic, and
M
is Mg, Ca, Al, Sb, Sn, Ge, Ti, Fe, Zr, Zn, Ce, Bi, Sr, Mn, Li, Na, K and/or a protonated nitrogen base and
m
is 1 to 4,
characterized in that the dialkylphosphinic salts have a sustainably produced carbon content of 0.000001% to 100% by weight, based on the total mass of carbon in the compound.

## Description

The invention relates to sustainably produced dialkylphosphinic salts and to a process for production thereof from renewable raw materials.

The invention likewise relates to the use of the sustainably produced dialkylphosphinic salts. In the context of the present invention, the term "sustainable" or "sustainably" is defined in relation to environmental goals exclusively, and refers to the ability to maintain or enhance resource productivity on a long-term basis.

Many materials that serve for production of (semi)organic products are traditionally obtained from crude oil. Environmental, economic and sustainability concerns are restricting the use of products from this limited resource. For example, synthetic surfactants have been blamed for environmental incidents, especially with regard to water problems in rivers and seas. Similar or different problems can occur in the case of products made from crude oil; moreover, crude oil itself is a severe environmental pollutant because it is hazardous to water, as in the case of tanker accidents for instance.

There is therefore a desire for producing (semi)organic materials from more environmentally friendly and sustainable resources. Recent researches and industrial developments in chemical engineering have shown that conventional monomers such as ethylene, acrylic acid or methyl methacrylate could be produced entirely from renewable raw materials. As used herein, the term "renewable" refers to a material derived from natural processes such as agriculture or forestry that can be replenished or restored to remain available for future generations.

Such new processes can have the disadvantage that entirely different raw materials are needed for the chemical manufacturing purpose, which requires a complete remodelling of the original petroleum-based production processes and the associated facilities. The complete abandonment of the existing, well-functioning traditional factories itself is a huge waste and not environmentally friendly.

Moreover, it is frequently the case that processes based on conventional petroleum-based raw materials are energetically superior to other alternative processes from renewable raw materials. As used herein, what is meant by "energetically superior" is lower energy consumption to produce same amount of the end product. This energy consumption can be measured, for example, by means of the carbon footprint. This is accomplished, inter alia, in what is called the life-cycle analysis in the calculation of the release of carbon dioxide equivalents for the raw materials used and the production process employed.

Therefore, there has been a need to produce chemical materials with an increased sustainable content, namely from a process featuring improved sustainability from the traditional petroleum-based process while largely preserving the optimal energy efficiency. In the context of the present invention, such produced chemical materials are referred as "sustainably produced" chemical materials.

It is an object of the present invention to provide sustainably produced dialkylphosphinic salts, and a process for production thereof with better sustainability than the traditional petroleum-based process.

The invention therefore provides sustainably produced dialkylphosphinic salts of the formula (I) 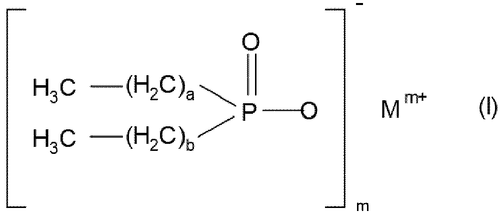 in which
- a and b: may be the same or different and are each independently 1 to 9, and where the carbon chains may be linear, branched or cyclic, and
- M: is Mg, Ca, Al, Sb, Sn, Ge, Ti, Fe, Zr, Zn, Ce, Bi, Sr, Mn, Li, Na, K and/or a protonated nitrogen base and
- m: is 1 to 4,
characterized in that the dialkylphosphinic salts have a sustainably produced carbon content of 0.000001 % by weight to 100% by weight, based on the total mass of carbon in the compound.

These sustainably produced dialkylphosphinic salts preferably have a sustainably produced carbon content of 0.0001 % by weight to 100% by weight, based on the total mass of carbon in the compound.

These sustainably produced dialkylphosphinic salts more preferably have a sustainably produced carbon content of 0.001 % by weight to 100% by weight, based on the total mass of carbon in the compound.

Preferably, in formula (I), a and b are the same or different and are each independently 1 to 5, where the carbon chains may be linear, branched or cyclic and M is Al, Fe, TiO_{q} (with q = 0 to 1.9) or Zn.

More preferably, in formula (I), a and b are each 1 and M is Al.

In the context of the present invention, the sustainably produced carbon content of the dialkylphosphinic salts preferably comes from olefins produced from renewable or recycled raw materials.

Said renewable raw materials are preferably selected from tall oil, tung oil, wood tar, creosote, or vegetable oils such as palm oil, soya oil, rapeseed oil, sunflower oil, palm kernel oil, cottonseed oil, peanut oil, maize kernel oil, coconut oil, olive oil, sesame oil, linseed oil and/or safflower oil. One preferred category of such renewable raw material is tall oil.

Said recycled raw materials can be selected from food wastes, residues or wastes from food production, papermaking or pulp processing, and any other materials of recycled origin. One particularly preferred example of said recycled raw materials is pyrolysis oil from plastic wastes, for example from used tyres.

The invention also relates to a process for producing sustainably produced dialkylphosphinic salts of the formula (I), characterized in that the starting components converted are an organic component with a phosphorus component and a metal component, where at least one of these starting components contain or have been at least partially produced from renewable or recycled raw materials.

The organic component is preferably an olefin that has been at least partially produced from renewable or recycled raw materials.

In another process for producing sustainably produced dialkylphosphinic salts, a substream of recycled raw materials is mixed into a main stream of non-recycled raw materials, and then the required/stoichiometric amount of starting component is removed from the common product stream.

The organic component produced in the processes according to the invention is preferably an olefin in a steamcracker.

The process for producing sustainably produced dialkylphosphinic salts is preferably performed by, in a corresponding process, feeding a substream of renewable raw materials and/or of recycled raw materials into a main stream of conventional raw materials, and using the required amount of sustainably produced organic component from the common product stream for the further process steps. As used herein, the conventional raw materials are originated from petroleum.

In the process according to the invention for producing sustainably produced dialkylphosphinic salts, preference is given to using a renewable raw material, where this renewable raw material is converted to the olefin together with conventional raw materials, then the required amount of sustainably produced olefin from the common product stream is used for the reaction with derivatives of hypophosphorous acid to give a derivative of the dialkylphosphinic acid, and then this derivative of the dialkylphosphinic acid is reacted with an aluminium salt to give aluminium dialkylphosphinate.

The process for producing sustainably produced dialkylphosphinic salts is preferably performed by, in a corresponding process, feeding a substream of renewable raw materials and/or of recycled raw materials into a main stream of conventional raw materials, and using the common product stream of the organic component for the further process steps.

In the process according to the invention for producing sustainably produced dialkylphosphinic salts, preference is given to using a renewable raw material, where this renewable raw material is converted to the olefin together with conventional raw materials, then the common olefin product stream is used for the reaction with derivatives of hypophosphorous acid to give a derivative of the dialkylphosphinic acid, and then this derivative of the dialkylphosphinic acid is reacted with an aluminium salt to give aluminium dialkylphosphinate.

Preference is given to ensuring the classification of the olefin originating from renewable raw material in the total amount of the substream process by means of a certification method and a resultant certificate. A preferred certification scheme for an olefin originating from renewable raw material in Germany is the REDcert² scheme run by TUV Nord Cert GmbH for the certification of sustainable material flow in the chemical industry.

Preference is also given to a process in which the derivatives of hypophosphorous acid have been produced in a substream process from recycled raw materials and conventional raw materials.

It is preferable in accordance with the invention that raw materials for derivatives of hypophosphorous acid (white phosphorus in particular) come from a mono-incineration process as described, for example, by EP2792949A1 or DE102016011287A1. According to the invention, a modified Wöhler process is applied to the sludge.

It is preferable in accordance with the invention that derivatives of hypophosphorous acid are produced from white phosphorus that comes from a thermochemical process which is operated entirely with recycled raw materials that are of recycled origin, or which is run by the substream method as mentioned above.

Recycled raw materials may preferably be sewage sludge from wastewater treatment plants, bonemeal etc.

Preference is likewise given to a process in which the aluminium salt has been produced in a substream process from recycled raw materials and conventional raw materials.

In the course of the substream process, in the production of aluminium sulfate, preference is given to using aluminium scrap, sewage sludge from wastewater treatment plants, and generally aluminium-containing chemical wastes.

The olefin used for producing the inventive dialkylphosphinic salts is preferably ethylene, and the aluminium salt used for producing the inventive dialkylphosphinic salts is preferably aluminium sulfate.

The invention finally also relates to the use of sustainably produced dialkylphosphinic salts according to at least one of Claims 1 to 10 as intermediate for further syntheses, as synergist, as binder, as crosslinker or accelerator in the curing of epoxy resins, polyurethanes, unsaturated polyester resins, as polymer stabilizers, as crop protection agents, as sequestrants, as mineral oil additive, as anticorrosive, in washing and cleaning composition applications, in electronics applications, in or as flame retardants, as flame retardants for clearcoats and intumescent coatings, in or as flame retardants for wood and other cellulosic products, in or as reactive and/or nonreactive flame retardants for polymers, for production of flame-retardant polymer moulding compounds, for production of flame-retardant polymer mouldings and/or for imparting flame retardancy to polyester and pure cellulose and cellulose blend fabrics by impregnation and/or as synergist in further flame retardant mixtures.

The invention also encompasses flame-retardant thermoplastic or thermoset polymer moulding compounds or polymer mouldings, films, filaments and/or fibres containing 0.1% to 45% by weight of sustainably produced dialkylphosphinic salts according to one or more of Claims 1 to 10, 55% to 99.9% by weight of thermoplastic or thermoset polymer or mixtures thereof, 0% to 55% by weight of additives and 0% to 55% by weight of filler or reinforcing materials, where the sum total of the components is 100% by weight.

The invention preferably encompasses flame-retardant thermoplastic or thermoset polymer moulding compounds or polymer mouldings, films, filaments and/or fibres containing 1% to 30% by weight of sustainably produced dialkylphosphinic salts according to one or more of Claims 1 to 10, 10% to 97% by weight of thermoplastic or thermoset polymer or mixtures thereof, 1% to 30% by weight of additives and 1% to 30% by weight of filler or reinforcing materials, where the sum total of the components is 100% by weight.

The flame-retardant thermoplastic or thermoset polymer moulding compounds or polymer mouldings, films, filaments and/or fibres containing sustainably produced dialkylphosphinic salts according to one or more of Claims 1 to 10 are preferably characterized in that the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/ acrylonitrile-butadiene-styrene) or PPE/HIPS (polyphenylene ether/HI polystyrene) polymer type, and/or thermoset polymers of the unsaturated polyester or epoxy resin type.

The subject-matter of the invention includes a process for producing a halogen-free flame retardant in which a wholly optimal sustainable process or raw material combination is employed for at least one starting component.

Such a process according to the invention is composed of the process for producing a halogen-free flame retardant from starting components and subordinate parts of the process for production of these starting components.

In such a subordinate part of the process, the invention comprises feeding in a substream of sustainable raw materials in addition to a main stream of conventional raw materials, and then using only the corresponding amount of sustainable starting component from the product stream for the further process steps.

In this way, it is possible to combine the environmental benefit of the sustainable origin of the raw material with the processing thereof in an energetically optimal process to give the starting component.

This basic principle is especially advantageous where starting components are not newly producible or cannot be newly produced (as in the case of organic substances, for example), but sustainability is achieved by recovering the raw material solely by recycling. A substream of recycled raw material is mixed here with the non-recycled main raw material stream. The corresponding proportion of extra product produced can be assigned to the recycled raw material in the overall material assessment.

One novel and inventive aspect of the present invention is to produce a halogen-free flame retardant by a process in which at least one starting component is produced by such a substream process.

The process according to the invention for production of dialkylphosphinic salts according to the invention proceeds from an organic component, a phosphorus component and a metal component.

The process according to the invention for production of dialkylphosphinic salts according to the invention involves reacting an organic component with a phosphorus component and a metal component, wherein at least one of these reactants originate from a substream process according to the invention.

The raw materials according to the invention for the organic component according to the invention preferably come from sustainable production, the latter comprising renewable raw materials that have been produced on a CO₂-neutral basis, are not based on a petrochemical origin, are not based on crude oil, come from physical recycling and/or originate from the circular economy. According to the principles of the circular economy, the economy works with avoidance of wastes and environmental pollution.

The dialkylphosphinic salts according to the invention are therefore produced in a process according to the invention which draws at least one of several raw materials from such a substream process.

In the process according to the invention for production of the dialkylphosphinic salts according to the invention, the organic component used is an olefin.

According to the invention, the raw material for the olefin in the aforementioned substream process of this kind is at least partially produced from a sustainable origin.

The raw material for the olefin may originate from tung oil, wood tar, creosote, vegetable oil (palm oil, soya oil, rapeseed oil, sunflower oil, palm kernel oil, cottonseed oil, peanut oil, maize kernel oil, coconut oil, olive oil, sesame oil, linseed oil and/or safflower oil), and also from fats and oils from food wastes or from residues and/or wastes from food production and processing.

The raw material for the olefin may also originate from plastics from recycled processes, such as from pyrolysis oils from plastic wastes.

Tall oil usable in accordance with the invention advantageously comes from the pulp process (Kraft process). The tall oil components here are subjected to alkaline hydrolysis and converted to the acids by acidification. Crude tall oil is obtained. This is refined into the resin acids and fatty acids by vacuum distillation. There is also tall oil pitch and low boilers.

Tall oil usable in accordance with the invention is composed of 40-45% by weight of fatty acids, 30-50% by weight of resin acids and 10-28% by weight of sterins.

For the possible use or utilization of the sustainable raw materials, it is important that they are as similar as possible in their physical properties to the conventional non-sustainable raw materials. For instance, for reasons of pumpability, viscosity (for example at 70°C) should have a value of 25-40 mm²/s, and the softening point should be between 0 and 100°C.

For reduction of the formation of coke encrustations for a utilization according to the invention, it is essential that the tall oil has a sulfur content of 0.003% to 3%.

To keep the corrosion of vessel walls low, according to the invention, the tall oil has an acid number of 145-180 mg KOH/g.

The resin acids are condensed tricyclic systems (resins, C₂₀H₃₀O₂).

The tall oil fatty acids according to the invention are C₁₈ fatty acids similar to soybean oil. Neutral components ("sterins", esters, sterols, hydrocarbons) are unwanted.

Fatty acids usable in accordance with the invention are palmitic acid, stearic acid, oleic acid, linoleic acid, pinolenic acid, arachidonic acid.

A process according to the invention for production of dialkylphosphinic salts according to the invention is characterized in that the olefin is produced by the substream process in a steamcracker. The raw material here is treated in a furnace at 750 to 900°C for short residence times (0.1-0.6 s). The raw material has been diluted with steam beforehand in order to increase the olefin yield and to reduce unwanted coke deposits. The steam to raw material ratio is 0.3:1 to 1:1.

In the substream process for production of the organic component, the ratio of conventional raw material to sustainable raw material is preferably 10⁹:1 to 1:10⁶.

A substream process according to the invention for the production of the phosphorus component essentially proceeds from sewage sludge from communal or industrial sewage treatment plants. This contains calcium-, aluminium- and iron phosphate-containing precipitates, and organically bound phosphorus.
Iron phosphate-containing precipitates are less preferred here since they are converted to unwanted ferrophosphorus in the further process steps.

The aforementioned precipitates are preferably additionally added to the calcium phosphate ores in the conventional processes, for example thermoelectric processes, for production of yellow phosphorus.

The recycled sustainable phosphorus is preferably reacted with sodium hydroxide solution by boiling according to the prior art to give sodium hypophosphite.

The phosphorus that comes from a recovered sustainable (phosphorus) source, together with non-sustainable phosphorus, is preferably reacted with sodium hydroxide solution by boiling according to the prior art to give sodium hypophosphite. For the further production of the sustainably produced dialkylphosphinic salts according to the invention, the proportion (based on phosphorus) of hypophosphite used is only as high as that in which phosphorus from a recovered sustainable (phosphorus) source was originally used.

In the substream process for production of the phosphorus component, the ratio of conventional raw material to sustainable raw material is preferably 10⁹:1 to 1:10⁶.

Sustainable sources may also be recycling processes.

The substream process according to the invention for production of the metal component, for example for aluminium, is the feeding of recovered aluminium salts into what is called the Bayer process for production of aluminium hydroxide.

In the substream process for production of the metal component, the ratio of conventional raw material to sustainable raw material is preferably 10⁹:1 to 1:10⁶. Sustainable sources here may likewise be recycling processes.

It is a feature of a process according to the invention for production of dialkylphosphinic salts that the phosphorus component used is hypophosphorous acid or one of its derivatives.

In a process according to the invention for production of dialkylphosphinic salts according to the invention, the metal component used is preferably a metal salt.

The metal salt is preferably aluminium sulfate.

A process according to the invention for production of dialkylphosphinic salts according to the invention is characterized in that
a) the raw material for the ethylene is from a sustainable origin, i.e. a renewable origin from CO₂-neutral production and/or from physical recycling and/or from the circular economy,
b) is converted to ethylene in a substream process with other raw materials that are not of sustainable origin,
c) ethylene in accordance with the amount of raw material from sustainable origin and derivatives of hypophosphorous acid are converted to a derivative of diethylphosphinic acid, and the
d) derivative of diethylphosphinic acid and an aluminium sulfate are converted to the aluminium diethylphosphinate according to the invention.

Another process according to the invention for production of the dialkylphosphinic salts according to the invention is characterized in that
a) the raw material for the ethylene is from a sustainable origin, i.e. a renewable origin from CO₂-neutral production, from physical recycling and/or from the circular economy,
b) is converted to ethylene in a substream process with other raw materials that are not of sustainable origin,
c) ethylene in accordance with the amount of raw material from sustainable origin and derivatives of hypophosphorous acid are converted to a derivative of diethylphosphinic acid, where the derivatives of hypophosphorous acid have been prepared in a substream process from recycled raw materials and conventional raw materials,
d) the derivative of diethylphosphinic acid is reacted with an aluminium sulfate to give the aluminium diethylphosphinate according to the invention.

A further process according to the invention for production of dialkylphosphinic salts according to the invention is characterized in that
a) the raw material for the ethylene is from a sustainable origin, i.e. a renewable origin from CO₂-neutral production, from physical recycling and/or from the circular economy,
b) is converted to ethylene in a substream process with other raw materials that are not of sustainable origin,
c) ethylene in accordance with the amount of raw material from sustainable origin and derivatives of hypophosphorous acid are converted to a derivative of diethylphosphinic acid, where the derivatives of hypophosphorous acid have been prepared in a substream process from recycled raw materials and conventional raw materials,
d) the derivative of diethylphosphinic acid is reacted with an aluminium sulfate to give the aluminium diethylphosphinate according to the invention, where the aluminium sulfate has been produced in a substream process from recycled raw materials and conventional raw materials.

The process according to the invention preferably uses at least one process auxiliary from the group of pH modifiers (e.g. acids, alkalis), free-radical initiators (sodium peroxodisulfate), surface modifiers, antifoams, dust inhibitors and/or agglomerating aids.

For the stability of the bulk density and tamped density of the flame retardant mixtures during agitation (during transport and industrial processing), it is advantageous when the diorganylphosphinic salts according to the invention and additionally synergists are in small particle sizes. Accordingly, preference is given to an average particle size of 1 to 100 µm of both components.

Preferably, the diorganylphosphinic salts according to the invention have
an average particle size of 0.1 to 1000 µm,
a bulk density of 80 to 800 g/l,
a tamped density/tapped density of 100 g/l to 1100 g/l,
an angle of repose of 5 to 45 degrees,
a BET surface area of 1 to 40 m²/g,
L color values of 85 to 99.9,
a color values of -4 to +9 and
b color values of -2 to +6.

More preferably, the diorganylphosphinic salts according to the invention have an average particle size of 0.5 to 800 µm,
a bulk density/tapped density of 80 g/l to 600 g/l,
a tamped density of 600 g/l to 800 g/l and
an angle of repose of 10 to 40 degrees.

More preferably, the synergists according to the invention have
an average particle size of 1.5 to 900 µm,
a bulk density/tapped density of 80 g/l to 600 g/l,
an angle of repose of 10 to 40 degrees.

Flame retardant mixtures according to the invention contain

| | |
|---|---|
| 1-99% | by weight of diorganylphosphinic salts according to the invention, |
| 1-99% | by weight of at least one synergist according to the invention. |

In the aforementioned use, preference is given to using the diorganylphosphinic salts together with synergists, where the synergists are melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphates, melam polyphosphates, melem polyphosphates and/or melon polyphosphates; or melamine condensation products such as melam, melem and/or melon; or oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, urea cyanurate, dicyandiamide and/or guanidine; or nitrogen-containing phosphates of the formula (NH₄)_{y}H_{3-y}PO₄ or (NH₄PO₃)_{z} with y = 1 to 3 and z = 1 to 10 000; or aluminium phosphites, zinc phosphites, aluminium pyrophosphites, aluminium phosphonates, aluminium pyrophosphonates; or silicates, zeolites, silicas, ceramic powder, zinc compounds, e.g. zinc borate, zinc carbonate, zinc stannate, zinc hydroxystannate, zinc phosphate, zinc sulfide, zinc oxide, zinc hydroxide, tin oxide hydrate, basic zinc silicate, zinc molybdate, magnesium hydroxide, hydrotalcite, magnesium carbonate, calcium magnesium carbonate; salts of ethylphosphonic acid, of propylphosphonic acid, of butylphosphonic acid, of n-butylphosphonic acid, of sec-butylphosphonic acid, of hexylphosphonic acid and/or of octylphosphonic acid.

Flame-retardant polymer moulding compounds, mouldings, films, filaments and/or fibres according to the invention contain 25-99% by weight of at least one thermoplastic and/or thermoset polymer and 1-75% by weight of at least one flame retardant mixture according to the invention.

Flame-retardant polymer moulding compounds, mouldings, films, filaments and/or fibres according to the invention contain

| | |
|---|---|
| 25-99% | by weight of at least one thermoplastic and/or thermoset polymer |
| 1-75% | by weight of at least one flame retardant mixture according to the invention |
| 1-65% | by weight of at least one reinforcing agent according to the invention (e.g. glass fibres). |

Flame-retardant polymer moulding compounds, mouldings, films, filaments and/or fibres according to the invention contain

| | |
|---|---|
| 25-99% | by weight of at least one thermoplastic and/or thermoset polymer |
| 1-75% | by weight of at least one flame retardant mixture according to the invention |
| 1-65% | by weight of at least one reinforcing agent according to the invention (e.g. glass fibres) |
| 0.01-25% | by weight of at least one additive according to the invention. |

Preference is given to such a use where further additives are used, these being antioxidants, UV stabilizers, gamma ray stabilizers, hydrolysis stabilizers, antistats, emulsifiers, nucleating agents, plasticizers, processing auxiliaries, impact modifiers, dyes, pigments and others.

Preferably, the polymer for the aforementioned use comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/acrylonitrile-butadiene-styrene) or PPE/HIPS (polyphenylene ether/HI polystyrene) polymer type, and/or thermoset polymers of the unsaturated polyester or epoxy resin type.

The polymers preferably originate from the group of the thermoplastic polymers such as polyester, polystyrene or polyamide, and/or the thermoset polymers.

The polymers are preferably polymers of mono- and diolefins, for example polypropylene, polyisobutylene, polybutene-1, poly-4-methylpentene-1, polyisoprene or polybutadiene, and addition polymers of cycloolefins, for example of cyclopentene or norbornene; and also polyethylene (which may optionally be crosslinked), e.g. high-density polyethylene (HDPE), high-density high-molar mass polyethylene (HDPE-HMW), high-density ultrahigh-molar mass polyethylene (HDPE-UHMW), medium-density polyethylene (MDPE), low-density polyethylene (LDPE), linear low-density polyethylene (LLDPE), branched low-density polyethylene (BLDPE), and mixtures thereof.

The polymers are preferably copolymers of mono- and diolefins with one another or with other vinyl monomers, for example ethylene-propylene copolymers, linear low-density polyethylene (LLDPE) and mixtures thereof with low-density polyethylene (LDPE), propylene-butene-1 copolymers, propylene-isobutylene copolymers, ethylene-butene-1 copolymers, ethylene-hexene copolymers, ethylene-methylpentene copolymers, ethylene-heptene copolymers, ethylene-octene copolymers, propylene-butadiene copolymers, isobutylene-isoprene copolymers, ethylene-alkyl acrylate copolymers, ethylene-alkyl methacrylate copolymers, ethylene-vinyl acetate copolymers and copolymers thereof with carbon monoxide, or ethylene-acrylic acid copolymers and salts thereof (ionomers), and also terpolymers of ethylene with propylene and a diene such as hexadiene, dicyclopentadiene or ethylidenenorbornene; and also mixtures of such copolymers with one another, for example polypropylene/ethylene-propylene copolymers, LDPE/ethylene-vinyl acetate copolymers, LDPE/ethylene-acrylic acid copolymers, LLDPE/ethylene-vinyl acetate copolymers, LLDPE/ethylene-acrylic acid copolymers and alternating or random polyalkylene/carbon monoxide copolymers and mixtures thereof with other polymers, for example polyamides.

The polymers are preferably hydrocarbon resins (e.g. C₅-C₉), including hydrogenated modifications thereof (e.g. tackifier resins) and mixtures of polyalkylenes and starch.

The polymers are preferably polystyrene (Polystyrol 143E (BASF), poly(p-methylstyrene), poly(alpha-methylstyrene)).

The polymers are preferably copolymers of styrene or alpha-methylstyrene with dienes or acrylic derivatives, for example styrene-butadiene, styrene-acrylonitrile, styrene-alkyl methacrylate, styrene-butadiene-alkyl acrylate and methacrylate, styrene-maleic anhydride, styrene-acrylonitrile methacrylate; high impact resistance mixtures of styrene copolymers and another polymer, for example a polyacrylate, a diene polymer or an ethylene-propylene-diene terpolymer; and block copolymers of styrene, for example styrene-butadiene-styrene, styreneisoprene-styrene, styrene-ethylene/butylene-styrene or styrene-ethylene/propylene-styrene.

The polymers are preferably graft copolymers of styrene or alpha-methylstyrene, for example styrene on polybutadiene, styrene on polybutadiene-styrene or polybutadiene-acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene, styrene and alkyl acrylates/alkyl methacrylates on polybutadiene, styrene and acrylonitrile on ethylene-propylene-diene terpolymers, styrene and acrylonitrile on polyalkylacrylates or polyalkylmethacrylates, styrene and acrylonitrile on acrylate-butadiene copolymers, and mixtures thereof, such as are known, for example, as ABS, MBS, ASA or AES polymers.

The polymers are preferably halogenated polymers, for example polychloroprene, chlorine rubber, chlorinated and brominated copolymer of isobutylene-isoprene (halobutyl rubber), chlorinated or chlorosulfonated polyethylene, copolymers of ethylene and chlorinated ethylene, epichlorohydrin homo- and copolymers, especially polymers of halogenated vinyl compounds, for example polyvinyl chloride, polyvinylidene chloride, polyvinyl fluoride, polyvinylidene fluoride; and copolymers thereof, such as vinyl chloride-vinylidene chloride, vinyl chloride-vinyl acetate or vinylidene chloride-vinyl acetate.

The polymers are preferably polymers deriving from alpha, beta-unsaturated acids and derivatives thereof, such as polyacrylates and polymethacrylates, butyl acrylate-impact-modified polymethylmethacrylates, polyacrylamides and polyacrylonitriles and copolymers of the cited monomers with one another or with other unsaturated monomers, for example acrylonitrile-butadiene copolymers, acrylonitrile-alkyl acrylate copolymers, acrylonitrile-alkoxyalkyl acrylate copolymers, acrylonitrile-vinyl halide copolymers or acrylonitrile-alkyl methacrylate-butadiene terpolymers.

The polymers are preferably polymers deriving from unsaturated alcohols and amines or from the acyl derivatives or acetals thereof, such as polyvinyl alcohol, polyvinyl acetate, stearate, benzoate or maleate, polyvinyl butyral, polyallyl phthalate, polyallylmelamine; and copolymers thereof with olefins.

The polymers are preferably homo- and copolymers of cyclic ethers, such as polyalkylene glycols, polyethylene oxide, polypropylene oxide or copolymers thereof with bisglycidyl ethers.

The polymers are preferably polyacetals, such as polyoxymethylene, and those polyoxymethylenes which comprise comonomers, for example ethylene oxide; polyacetals modified with thermoplastic polyurethanes, acrylates or MBS.

The polymers are preferably polyphenylene oxides and sulfides and mixtures thereof with styrene polymers or polyamides.

The polymers are preferably polyurethanes deriving from polyethers, polyesters and polybutadienes having both terminal hydroxyl groups and aliphatic or aromatic polyisocyanates, and the precursors thereof.

The polymers are preferably polyamides and copolyamides that derive from diamines and dicarboxylic acids and/or from aminocarboxylic acids or the corresponding lactams, such as nylon 2/12, nylon 4 (poly-4-aminobutyric acid, Nylon^{®} 4, from DuPont), nylon 4/6 (poly(tetramethyleneadipamide), poly(tetramethyleneadipamide), Nylon^{®} 4/6, from DuPont), nylon 6 (polycaprolactam, poly-6-aminohexanoic acid, Nylon^{®} 6, from DuPont, Akulon^{®} K122, from DSM; Zytel^{®} 7301, from DuPont; Durethan^{®} B 29, from Bayer), nylon 6/6 (poly(N,N'-hexamethyleneadipamide), Nylon^{®} 6/6, from DuPont, Zytel^{®} 101, from DuPont; Durethan^{®} A30, Durethan^{®} AKV, Durethan^{®} AM, from Bayer; Ultramid^{®} A3, from BASF), nylon 6/9 (poly(hexamethylenenonanamide), Nylon^{®} 6/9, from DuPont), nylon 6/10 (poly(hexamethylenesebacamide), Nylon^{®} 6/10, from DuPont), nylon 6/12 (poly(hexamethylenedodecanediamide), Nylon^{®} 6/12, from DuPont), nylon 6/66 (poly(hexamethyleneadipamide-co-caprolactam), Nylon^{®} 6/66, from DuPont), nylon 7 (poly-7-aminoheptanoic acid, Nylon^{®} 7, from DuPont), nylon 7,7 (polyheptamethylenepimelamide, Nylon^{®} 7,7, from DuPont), nylon 8 (poly-8-aminooctanoic acid, Nylon^{®} 8, from DuPont), nylon 8,8 (polyoctamethylenesuberamide, Nylon^{®} 8,8, from DuPont), nylon 9 (poly-9-aminononanoic acid, Nylon^{®} 9, from DuPont), nylon 9,9 (polynonamethyleneazelamide, Nylon^{®} 9,9, from DuPont), nylon 10 (poly-10-aminodecanoic acid, Nylon^{®} 10, from DuPont), nylon 10,9 (poly(decamethyleneazelamide), Nylon^{®} 10,9, from DuPont), nylon 10,10 (polydecamethylenesebacamide, Nylon^{®} 10,10, from DuPont), nylon 11 (poly-11-aminoundecanoic acid, Nylon^{®} 11, from DuPont), nylon 12 (polylauryllactam, Nylon^{®} 12, from DuPont, Grillamid^{®} L20, from Ems Chemie), aromatic polyamides based on m-xylene, diamine and adipic acid; polyamides prepared from hexamethylenediamine and iso- and/or terephthalic acid (polyhexamethyleneisophthalamide, polyhexamethyleneterephthalamide) and optionally an elastomer as a modifier, for example poly-2,4,4-trimethylhexamethyleneterephthalamide or poly-m-phenyleneisophthalamide. Block copolymers of the abovementioned polyamides with polyolefins, olefin copolymers, ionomers or chemically bonded or grafted elastomers; or with polyethers, for example with polyethylene glycol, polypropylene glycol or polytetramethylene glycol. In addition, EPDM- or ABS-modified polyamides or copolyamides; and polyamides condensed during processing ("RIM polyamide systems").

It is also possible to use aromatic polyamides such as PA4T, PA6T, PA9T, PA10T, PA11T and/or MXD6, amorphous polyamides such as 6I/X and TPE-A "rigid" and "soft".

The polymers are preferably polyureas, polyimides, polyamide imides, polyether imides, polyester imides, polyhydantoins and/or polybenzimidazoles.

The polymers are preferably polyesters which derive from dicarboxylic acids and dialcohols and/or from hydroxycarboxylic acids or the corresponding lactones, such as polyethylene terephthalate, polybutylene terephthalate (Celanex^{®} 2500, Celanex^{®} 2002, from Celanese; Ultradur^{®}, from BASF), poly-1,4-dimethylolcyclohexane terephthalate, polyhydroxybenzoates, and block polyether esters which derive from polyethers with hydroxyl end groups; and also polyesters modified with polycarbonates or MBS.

The polymers are preferably polycarbonates, polyester carbonates, polysulfones, polyether sulfones and polyether ketones.

The thermoset polymers are preferably formaldehyde polymers, epoxide polymers, melamine-phenolic resin polymers and/or polyurethanes.

The thermoset polymers are preferably epoxy resins.

The thermoset polymers are preferably epoxy resins which have been cured with resols, phenols, phenol derivatives and/or dicyandiamide, alcohols and amines.

The epoxy resins are preferably polyepoxide compounds.

The epoxy resins preferably originate from the group of the novolaks and the bisphenol A resins.

The thermoset polymer preferably comprises unsaturated polyester resins, dicyclopentadiene-modified unsaturated polyesters, polyphenylene ethers or butadiene polymers; block copolymers with a polybutadiene or polyisoprene block and a block of styrene or alpha-methylstyrene; block copolymers with a first polybutadiene block and a second polyethylene block or ethylene-propylene block, block copolymers with a first polyisoprene block and a second polyethylene or ethylene-propylene block.

The thermoset polymer is preferably one based on epoxidized vegetable oils (epoxidized soybean/linseed oil), acrylic acid derivatives (acrylic acid, crotonic acid, isocrotonic acid, methacrylic acid, cinnamic acid, maleic acid, fumaric acid, methyl methacrylate) and hydroxyalkyl acrylates and/or hydroxyalkyl alkylacrylates (hydroxyethyl methacrylate, hydroxypropyl methacrylate, hydroxybutyl methacrylate, polyethylene glycol methacrylate).

The thermoset polymers preferably find use in electrical switch components, components in automobile construction, electrical engineering, electronics, printed circuit boards, prepregs, potting compounds for electronic components, in boat and rotor blade construction, in outdoor GFRP applications, domestic and sanitary applications, engineering materials and further products.

Preferably, the thermoset polymers comprise unsaturated polyester resins (UP resins) which derive from copolyesters of saturated and unsaturated polybasic starting materials, especially dicarboxylic acids or anhydrides thereof, with polyhydric alcohols, and vinyl compounds as crosslinking agents.

UP resins are cured by free-radical polymerization with initiators (e.g. peroxides) and accelerators.

Unsaturated polyesters may contain the ester group as a connecting element in the polymer chain.

Preferred unsaturated dicarboxylic acids and derivatives for preparation of the polyesters are maleic acid, maleic anhydride and fumaric acid, itaconic acid, citraconic acid, mesaconic acid. These may be blended with up to 200 mol%, based on the unsaturated acid components, of at least one aliphatic saturated or cycloaliphatic dicarboxylic acid.

Preferred saturated dicarboxylic acids are phthalic acid, isophthalic acid, terephthalic acid, dihydrophthalic acid, tetrahydrophthalic acid, hexahydrophthalic acid, endomethylenetetrahydrophthalic acid, adipic acid, succinic acid, sebacic acid, glutaric acid, methylglutaric acid, pimelic acid.

Preferred polyhydric, especially dihydric, optionally unsaturated alcohols are the customary alkanediols and oxaalkanediols having acyclic or cyclic groups.

Preferred unsaturated monomers copolymerizable with unsaturated polyesters preferably bear vinyl, vinylidene or allyl groups, for example preferably styrene, but also, for example, ring-alkylated or -alkenylated styrenes, where the alkyl groups may contain 1-4 carbon atoms, for example vinyltoluene, divinylbenzene, alpha-methylstyrene, tert-butylstyrene; vinyl esters of carboxylic acids having 2-6 carbon atoms, preferably vinyl acetate, vinyl propionate, vinyl benzoate; vinylpyridine, vinylnaphthalene, vinylcyclohexane, acrylic acid and methacrylic acid and/or esters thereof (preferably vinyl, allyl and methallyl esters) having 1-4 carbon atoms in the alcohol component, amides and nitriles thereof, maleic anhydride, maleic monoesters and diesters having 1-4 carbon atoms in the alcohol component, maleic mono- and -diamides or cyclic imides, such as butyl acrylate, methyl methacrylate, acrylonitrile, N-methylmaleimide or N-cyclohexylmaleimide; allyl compounds such as allylbenzene and allyl esters such as allyl acetate, diallyl phthalate, diallyl isophthalate, diallyl fumarate, allyl carbonates, diallyl phthalates, diallyl carbonates, triallyl phosphate and triallyl cyanurate.

A preferred vinyl compound for crosslinking is styrene.

Preferred unsaturated polyesters may bear the ester group in the side chain as well, for example polyacrylic esters and polymethacrylic esters.

Preferred hardener systems are peroxides and accelerators.

Preferred accelerators are metal coinitiators and aromatic amines and/or UV light and photosensitizers, for example benzoin ethers and azo catalysts such as azoisobutyronitrile, mercaptans such as lauryl mercaptan, bis(2-ethylhexyl) sulfide and bis(2-mercaptoethyl) sulfide.

In one process for preparing flame-retardant copolymers, at least one ethylenically unsaturated dicarboxylic anhydride derived from at least one C₄-C₈-dicarboxylic acid, at least one vinylaromatic compound and at least one polyol are copolymerized and then reacted with the flame retardant mixtures according to the invention.

Usable with preference are dicyclopentadiene-modified unsaturated polyesters which are obtained by reaction of dicyclopentadiene, maleic anhydride, water, saturated alcohol and optionally a further polybasic acid. The polyester is crosslinked with a free-radically polymerizable monomer such as styrene to give the resin.

The polymers are preferably crosslinked polymers which derive from aldehydes and from phenols, urea or melamine, such as phenol-formaldehyde, urea-formaldehyde and melamine-formaldehyde resins.

The polymers are preferably crosslinkable acrylic resins that derive from substituted acrylic esters, for example from epoxy acrylates, urethane acrylates or polyester acrylates.

The polymers are preferably alkyd resins, polyester resins and acrylate resins which have been crosslinked with melamine resins, urea resins, isocyanates, isocyanurates, polyisocyanates or epoxy resins.

The polymers are preferably crosslinked epoxy resins which derive from aliphatic, cycloaliphatic, heterocyclic or aromatic glycidyl compounds, for example products of bisphenol A diglycidyl ethers, bisphenol F diglycidyl ethers, which are crosslinked by means of customary hardeners, for example anhydrides or amines, with or without accelerators.

Preferred thermosets are polymers from the class of the cyanate esters, cyanate ester/bismaleimide copolymer, bismaleimide/triazine epoxy blends and butadiene polymers.

Preferred butadiene polymers are block copolymers containing 70-95% by weight of one or more monovinyl-substituted aromatic hydrocarbon compounds having 8-18 carbon atoms and 30-5% by weight of one or more conjugated dienes having 4-12 carbon atoms and optionally crosslinkers.

Preferably, the flame retardant mixtures according to the invention are also used in resin systems consisting of polybutadiene resins or polyisoprene resins or mixtures thereof with unsaturated butadiene- or isoprene-containing polymers which can take part in crosslinking.

Preferably, the polymers are crosslinked epoxy resins which derive from aliphatic, cycloaliphatic, heterocyclic or aromatic glycidyl compounds, for example from bisphenol A diglycidyl ethers and bisphenol F diglycidyl ethers, which are crosslinked by means of customary hardeners and/or accelerators.

Suitable glycidyl compounds are bisphenol A diglycidyl esters, bisphenol F diglycidyl esters, polyglycidyl esters of phenol-formaldehyde resins and cresolformaldehyde resins, polyglycidyl esters of phthalic acid, isophthalic acid and terephthalic acid, and of trimellitic acid, N-glycidyl compounds of aromatic amines and heterocyclic nitrogen bases, and di- and polyglycidyl compounds of polyhydric aliphatic alcohols.

Suitable hardeners are aliphatic, cycloaliphatic, aromatic and heterocyclic amines or polyamines, such as ethylenediamine, diethylenetriamine, triethylenetetramine, propane-1,3-diamine, hexamethylenediamine, aminoethylpiperazine, isophoronediamine, polyamidoamine, diaminodiphenylmethane, diaminodiphenyl ether, diaminodiphenol sulfones, aniline-formaldehyde resins, 2,2,4-trimethylhexane-1,6-diamine, m-xylylenediamine, bis(4-aminocyclohexyl)methane, 2,2-bis(4-aminocyclohexyl)propane, 3-aminomethyl-3,5,5-trimethylcyclohexylamine (isophoronediamine), polyamidoamines, cyanoguanidine and dicyandiamide, and likewise polybasic acids or anhydrides thereof, for example phthalic anhydride, maleic anhydride, tetrahydrophthalic anhydride, methyltetrahydrophthalic anhydride, hexahydrophthalic anhydride and methylhexahydrophthalic anhydride, and also phenols, for example phenol-novolac resin, cresol-novolac resin, dicyclopentadiene-phenol adduct resin, phenol aralkyl resin, cresolaralkyl resin, naphtholaralkyl resin, biphenol-modified phenolaralkyl resin, phenol-trimethylolmethane resin, tetraphenylolethane resin, naphthol-novolac resin, naphthol-phenol cocondensate resin, naphthol-cresol cocondensate resin, biphenol-modified phenol resin and aminotriazine-modified phenol resin. All hardeners can be used alone or in combination with one another.

Suitable catalysts or accelerators for the crosslinking in the polymerization are tertiary amines, benzyldimethylamine, N-alkylpyridines, imidazole, 1-methylimidazole, 2-methylimidazole, 2-ethyl-4-methylimidazole, 2-ethyl-4-methylimidazole, 2-phenylimidazole, 2-heptadecylimidazole, metal salts of organic acids, Lewis acids and amine complex salts.

The polymers are preferably crosslinked polymers which derive from aldehydes on the one hand, and phenols, urea or melamine on the other hand, such as phenol-formaldehyde, urea-formaldehyde and melamine-formaldehyde resins. The polymers are preferably crosslinkable acrylic resins that derive from substituted acrylic esters, for example from epoxy acrylates, urethane acrylates or polyester acrylates.

Preferred polyester polyols are obtained by polycondensation of a polyalcohol such as ethylene glycol, diethylene glycol, propylene glycol, 1,4-butanediol, 1,5-pentanediol, methylpentanediol, 1,6-hexanediol, trimethylolpropane, glycerol, pentaerythritol, diglycerol, glucose and/or sorbitol, with a dibasic acid such as oxalic acid, malonic acid, succinic acid, tartaric acid, adipic acid, sebacic acid, maleic acid, fumaric acid, phthalic acid and/or terephthalic acid. These polyester polyols can be used alone or in combination.

Suitable polyisocyanates are aromatic, alicyclic and/or aliphatic polyisocyanates having not fewer than two isocyanate groups and mixtures thereof. Preference is given to aromatic polyisocyanates such as tolyl diisocyanate, methylene diphenyl diisocyanate, naphthylene diisocyanates, xylylene diisocyanate, tris(4-isocyanatophenyl)methane and polymethylenepolyphenylene diisocyanates; alicyclic polyisocyanates such as methylenediphenyl diisocyanate, tolyl diisocyanate; aliphatic polyisocyanates and hexamethylene diisocyanate, isophorone diisocyanate, dimeryl diisocyanate, 1,1-methylenebis(4-isocyanatocyclohexane-4,4'-diisocyanatodicyclohexylmethane isomer mixture, 1,4-cyclohexyl diisocyanate, Desmodur^{®} products (Bayer) and lysine diisocyanate and mixtures thereof.

Suitable polyisocyanates are modified products which are obtained by reaction of polyisocyanate with polyol, urea, carbodiimide and/or biuret.

The polymers are preferably unsaturated polyester resins which derive from copolyesters of saturated and unsaturated dicarboxylic acids with polyhydric alcohols, and vinyl compounds as crosslinking agents, and also the halogenated, flame-retardant modifications thereof.

The polymers are preferably crosslinkable acrylic resins which derive from substituted acrylic esters, for example from epoxy acrylates, urethane acrylates or polyester acrylates.

The polymers are preferably mixtures (polyblends) of the abovementioned polymers, for example PP/EPDM (polypropylene/ethylene-propylene-diene rubber), polyamide/EPDM or ABS (polyamide/ethylene-propylene-diene rubber or acrylonitrile-butadiene-styrene), PVC/EVA (polyvinyl chloride/ethylene-vinyl acetate), PVC/ABS (polyvinyl chloride/acrylonitrile-butadiene-styrene), PVC/MBS (polyvinyl chloride/methacrylate-butadiene-styrene), PC/ABS (polycarbonate/acrylonitrile-butadiene-styrene), PBTP/ABS (polybutylene terephthalate/acrylonitrile-butadiene-styrene), PC/ASA (polycarbonate/acrylic ester-styrene-acrylonitrile), PC/PBT (polycarbonate/polybutylene terephthalate), PVC/CPE (polyvinyl chloride/chlorinated polyethylene), PVC/acrylate (polyvinyl chloride/acrylates), POM/thermoplastic PUR (polyoxymethylene/thermoplastic polyurethane), PC/thermoplastic PUR (polycarbonate/thermoplastic polyurethane), POM/acrylate (polyoxymethylene/acrylate), POM/MBS (polyoxymethylene/methacrylate-butadiene-styrene), PPO/HIPS (polyphenylene oxide/high-impact polystyrene), PPO/PA 6,6 (polyphenylene oxide/nylon 6,6) and copolymers, PA/HDPE (polyamide/high-density polyethylene), PA/PP (polyamide/polyethylene), PA/PPO (polyamide/polyphenylene oxide), PBT/PC/ABS (polybutylene terephthalate/polycarbonate/acrylonitrile-butadiene-styrene) and/or PBT/PET/PC (polybutylene terephthalate/polyethylene terephthalate/polycarbonate).

The moulding compound produced is preferably of rectangular shape with a regular or irregular base, or of cubic shape, cuboidal shape, cushion shape or prism shape.

The flame retardant mixtures according to the invention can also be used in elastomers, for instance nitrile rubber, nitrile rubber with carboxyl groups and carboxy-terminated butadiene-acrylonitrile, chloroprene rubber, butadiene rubber, acrylonitrile-butadiene rubber, styrene-butadiene rubber, butadiene rubber with acrylic resin and thermoplastic polyimide, urethane-modified copolyester polymer and other elastomers.

Preferred further additives in the flame retardant mixtures according to the invention are from the group of the carbodiimides and/or (poly)isocyanates.

Preferred further additives come from the group of the sterically hindered phenols (e.g. Hostanox^{®} OSP 1), sterically hindered amines and light stabilizers (e.g. Chimasorb^{®} 944, Hostavin^{®} products), phosphonites and antioxidants (e.g. Sandostab^{®} PEPQ from Clariant) and separating agents (Licomont^{®} products from Clariant).

Preferred fillers in the flame retardant mixtures according to the invention are oxygen compounds of silicon, magnesium compounds, e.g. metal carbonates of metals of the second main group of the Periodic Table, magnesium oxide, magnesium hydroxide, hydrotalcites, dihydrotalcite, magnesium carbonates or magnesium calcium carbonates, calcium compounds, e.g. calcium hydroxide, calcium oxide, hydrocalumite, aluminium compounds, e.g. aluminium oxide, aluminium hydroxide, boehmite, gibbsite or aluminium phosphate, red phosphorus, zinc compounds and/or aluminium compounds.

Preferred further fillers are glass beads.

Glass fibres are preferably used as reinforcing materials.

Compounding units usable in accordance with the invention are multizone screw extruders having three-zone screws and/or short compression screws.

Compounding units usable in accordance with the invention are also co-kneaders, for example from Coperion Buss Compounding Systems, Pratteln, Switzerland, e.g. MDK/E46-11D, and/or laboratory kneaders (MDK 46 from Buss, Switzerland with L = 11D).

Compounding units usable in accordance with the invention are twin-screw extruders, for example from Coperion Werner & Pfleiderer GmbH & Co. KG, Stuttgart (ZSK 25, ZSK 30, ZSK 40, ZSK 58, ZSK MEGA-Compounder 40, 50, 58, 70, 92, 119, 177, 250, 320, 350, 380) and/or from Berstorff GmbH, Hanover, Leistritz Extrusionstechnik GmbH, Nuremberg.

Compounding units usable in accordance with the invention are ring extruders, for example from 3+Extruder GmbH, Laufen, with a ring of three to twelve small screws which rotate about a static core, and/or planetary gear extruders, for example from Entex, Bochum, and/or vented extruders and/or cascade extruders and/or Maillefer screws.

Compounding units usable in accordance with the invention are compounders with a contrarotatory twin screw, for example Compex 37 and 70 models from Krauss-Maffei Berstorff.

Effective screw lengths (L) according to the invention in the case of single-shaft extruders or single-screw extruders are 20 to 40D, in the case of twin-screw extruders 8 to 48D, and in the case of multizone screw extruders, for example, 25D with intake zone (L=10D), transition zone (L=6D) and ejection zone (L=9D).

The invention additionally relates to the use of the inventive flame retardant mixture as claimed in one or more of Claims 1 to 19 in or for plug connectors, current-bearing components in power distributors (residual current protection), printed circuit boards, potting compounds, plug connectors, circuit breakers, lamp housings, LED housings, capacitor housings, coil elements and ventilators, grounding contacts, plugs, in/on printed circuit boards, housings for plugs, cables, flexible printed circuit boards, charging cables for mobile phones, motor covers, textile coatings and other products.

These include mouldings in the form of components for the electrics/electronics sector, especially for parts of printed circuit boards, housings, films, wires, switches, distributors, relays, resistors, capacitors, coils, lamps, diodes, LEDs, transistors, connectors, regulators, memory elements and sensors, in the form of large-area components, especially of housing components for switchgear cabinets and in the form of components of complicated configuration with demanding geometry.

Preferably, in the case of such mouldings, the wall thickness is less than 0.5 mm, but may also be more than 1.5 mm (up to 10 mm). Particularly suitable thicknesses are less than 1.5 mm, more preferably less than 1 mm and especially preferably less than 0.5 mm.

The flame retardant mixture according to the invention is preferably used with glass fibres having an arithmetic mean length of 100 to 220 µm for production of flame-retardant polyamide moulding compounds and/or mouldings, wherein the production process for the polyamide moulding compound or the moulding is adjusted such that the glass fibres in the resulting polyamide moulding compound or the moulding have an arithmetic mean length in the range from 100 to 220 µm, and wherein the polyamide moulding compound or the moulding preferably has an IEC 60695-11-10 (UL94) classification of V-0.

Production, processing and testing of flame-retardant polymer moulding compounds and polymer mouldings

The dialkylphosphinic salts are mixed with the polymer pellets and any additives and incorporated into the polymer via the side intake of a twin-screw extruder (Leistritz ZSE 27/44D) at temperatures of 230 to 260°C (glass fibre-reinforced PBT), 260-310°C (PA 6,6) or at 250-275°C (PA 6). The glass fibres were added via a second side intake. The homogenized polymer strand was drawn off, cooled in a water bath and then pelletized to give flame-retardant polymer moulding compounds.

After sufficient drying, the moulding compositions were processed on an injection moulding machine (model: Arburg 320 C Allrounder) at melt temperatures of 240 to 300°C to give flame-retardant polymer mouldings. They can be used as test specimens and tested for flame retardancy and classified by the UL 94 test (Underwriter Laboratories).

The free flow of the flame retardant mixture according to the invention is determined according to Pfrengle (DIN ISO 4324 Surface active agents; powders and granules; measurement of the angle of repose, Dec. 1983, Beuth Verlag Berlin).

The aforementioned free flow is determined by the determination of the height of the cone of a powder or granular material or the ratio of cone radius to cone height. The cone is produced by pouring a specific amount of the substance to be examined through a specific funnel in a defined apparatus. The defined cone radius is produced by pouring the cone until the product flows over a circular plate raised from the base. The radius of the plate is fixed. The funnel has an internal diameter of 10 mm. The plate has a radius of 50 mm. 5 determinations are conducted and averaged. The height is measured in millimetres with a scale proceeding from the plate up to the vertex of the cone. The ratio of cone radius (50 mm) to cone height is calculated from the mean value.

Using a flame retardant mixture according to the prior art, cone of repose heights of 29.9 to 49.9 mm, corresponding to a span of 20 mm, were determined, and ratios of radius to height (= cot alpha) of 1.67 to 1.00, corresponding to a span of 0.67.

The angle of repose is the angle between the straight line formed by the base of the cone and the straight line formed by the cone mound, i.e. is determined by the cone tip and cone radius.

### Example 1

640 g of tall oil is processed together with 10 387 kg of conventional naphtha in a steamcracker to give ethylene. The ratio of conventional raw material to sustainable raw material is 16 230:1. The amount of tall oil used corresponds to 168 g of sustainable ethylene. This sustainably produced ethylene is fully reacted with 318 g of sodium hypophosphite monohydrate and 440 g of demineralized water at 120°C, 10 bar, with addition of sodium peroxodisulfate additive (processing aid). The product is additionally reacted with 1990 g of demineralized water and 628 g of aluminium sulfate solution (containing 4.3% Al). The pH is kept between 2 and 7 with pH modifiers, and the temperature between 25 and 100°C. The resultant solids are filtered off between 25 and 100°C, and washed with 39 to 7800 g of demineralized water between 25 and 100°C. After drying at 60 to 150°C and a pressure of 0.1 to 1 bar over the course of 0.1 to 10 h, 382 g of sustainably produced aluminium diethylphosphinate having a content of 100% by weight of sustainably produced carbon, based on the total mass of carbon, is obtained. The product has a residual moisture content of 0.2%, an average particle diameter of 28 µm, and a bulk density of 510 g/l (98% yield).

The aluminium diethylphosphinate thus obtained thus comes from a renewable origin to an extent of 43% (proportion of the ethylene from a renewable origin that has been converted to an extent of 100% in the aluminium diethylphosphinate).

### Example 2

640 g of tall oil is processed together with 10 387 kg of conventional naphtha in a steamcracker to give ethylene. The ratio of conventional raw material to sustainable raw material is 16 230:1. 168 g of this ethylene is fully reacted with 318 g of sodium hypophosphite monohydrate and 440 g of demineralized water at 120°C, 10 bar, with addition of sodium peroxodisulfate additive (processing aid). The product is additionally reacted with 1990 g of demineralized water and 628 g of aluminium sulfate solution (containing 4.3% Al). The pH is kept between 2 and 7 with pH modifiers, and the temperature between 25 and 100°C. The resultant solids are filtered off between 25 and 100°C, and washed with 39 to 7800 g of demineralized water between 25 and 100°C. After drying at 60 to 150°C and a pressure of 0.1 to 1 bar over the course of 0.1 to 10 h, 382 g of partly sustainably produced aluminium diethylphosphinate having a content of 0.006% by weight of sustainably produced carbon, based on the total mass of carbon, is obtained. The product has a residual moisture content of 0.15%, an average particle diameter of 31 µm, and a bulk density of 530 g/l (98% yield).

### Example 3

640 g of tall oil is processed together with 624 454.994 kg of conventional naphtha in a steamcracker to give ethylene. The ratio of conventional raw material to sustainable raw material is 975 711:1. The amount of tall oil used corresponds to 168 g of sustainable ethylene. This sustainably produced ethylene is fully reacted with 318 g of sodium hypophosphite monohydrate and 440 g of demineralized water at 120°C, 10 bar, with addition of sodium peroxodisulfate additive (processing aid). The product is additionally reacted with 1990 g of demineralized water and 628 g of aluminium sulfate solution (containing 4.3% Al). The pH is kept between 2 and 7 with pH modifiers, and the temperature between 25 and 100°C. The resultant solids are filtered off between 25 and 100°C, and washed with 39 to 7800 g of demineralized water between 25 and 100°C. After drying at 60 to 150°C

and a pressure of 0.1 to 1 bar over the course of 0.1 to 10 h, 384 g of sustainably produced aluminium diethylphosphinate having a content of 100% by weight of sustainably produced carbon, based on the total mass of carbon, is obtained. The product has a residual moisture content of 0.2%, an average particle diameter of 28 µm, and a bulk density of 500 g/l (98.5% yield).

### Example 4

10.6 g of tall oil is processed together with 10 387.797 kg of conventional naphtha or gas oil in a steamcracker to give ethylene. The ratio of conventional raw material to sustainable raw material is 975 711:1. 168 g of this ethylene is fully reacted with 318 g of sodium hypophosphite monohydrate and 440 g of demineralized water at 120°C, 10 bar, with addition of sodium peroxodisulfate additive (processing aid). The product is additionally reacted with 1990 g of demineralized water and 628 g of aluminium sulfate solution (containing 4.3% Al). The pH is kept between 2 and 7 with pH modifiers, and the temperature between 25 and 100°C. The resultant solids are filtered off between 25 and 100°C, and washed with 39 to 7800 g of demineralized water between 25 and 100°C. After drying at 60 to 150°C and a pressure of 0.1 to 1 bar over the course of 0.1 to 10 h, 380 g of partly sustainably produced aluminium diethylphosphinate having a content of 0.0001 % by weight of sustainably produced carbon, based on the total mass of carbon, is obtained. The product has a residual moisture content of 0.22%, an average particle diameter of 35 µm, and a bulk density of 535 g/l (97.5% yield).

### Example 5

Tall oil is converted to sustainable ethylene as a substream in a steamcracker. The ethylene obtained from the overall process which is attributable to the tall oil used in terms of mass balance is used for the subsequent synthesis.

Aluminium phosphate from sewage sludge is converted pro rata to yellow phosphorus in a thermoelectric process, and this is boiled with sodium hydroxide solution to give hypophosphite.

Ethylene is reacted with sodium hypophosphite in aqueous solution. This forms sodium diethylphosphinate. This is reacted - likewise in aqueous solution - with aluminium sulfate to give aluminium diethylphosphinate. The aluminium diethylphosphinate thus obtained thus comes from a renewable origin to an extent of 93% (proportion of the ethylene and hypophosphite from a renewable origin that has been converted to an extent of 100% in the aluminium diethylphosphinate).

### Example 6

Tall oil is converted to sustainable ethylene as a substream in a steamcracker. The ethylene obtained from the overall process which is attributable to the tall oil used in terms of mass balance is used for the subsequent synthesis.

Aluminium phosphate from sewage sludge is converted as a substream to yellow phosphorus in a thermoelectric process, and this is boiled with sodium hydroxide solution to give hypophosphite. The proportion of the sodium diethylphosphinate obtained in the overall process that is attributable via the phosphorus to the aluminium phosphate from sewage sludge is used for the subsequent synthesis. Aluminium sulfate is prepared from a recycled aluminium compound in a substream, and mainly from conventional aluminium hydroxide. The proportion of the aluminium sulfate obtained in the overall process which is attributable via the aluminium to recycled aluminium compound is used for the subsequent synthesis. Ethylene is reacted with sodium hypophosphite in aqueous solution. This forms sodium diethylphosphinate. This is reacted - likewise in aqueous solution - with aluminium sulfate to give aluminium diethylphosphinate. The aluminium diethylphosphinate thus obtained thus comes from a renewable origin to an extent of 100% (proportion of the ethylene, hypophosphite and aluminium from a renewable origin that has been converted to an extent of 100% in the aluminium diethylphosphinate).

### Example 7

880 g of pyrolysis oil from plastic recycling is processed together with 12 500 kg of conventional naphtha in a steamcracker to give ethylene. The ratio of conventional raw material to sustainable mineral material is 14 205:1. 168 g of this ethylene is reacted fully with 318 g of sodium hypophosphite monohydrate and 440 g of demineralized water at 120°C, 10 bar, with addition of sodium peroxodisulfate additive (processing auxiliary). The product is also reacted with 1990 g of demineralized water and 628 g of aluminium sulfate solution (containing 4.3% Al). The pH is kept between 2 und 7 with a pH modifier, and the temperature between 25 and 100°C. The solids formed are filtered off between 25 and 100°C and washed between 25 and 100°C with 39 to 7800 g of demineralized water. After drying at 60 to 150°C and a pressure of 0.1 to 1 bar for 0.1 to 10 h, 382 g of partly sustainably produced aluminium diethylphosphinate with a content of 0.007% by weight of sustainably produced carbon, based on the total mass of carbon, is obtained. The product has a residual moisture content of 0.2%, an average particle diameter of 30 µm and a bulk density of 530 g/l (98% yield).

### Example 8

880 g of pyrolysis oil from plastic recycling is processed together with 12 500 kg of conventional naphtha in a steamcracker to give ethylene. The ratio of conventional raw material to sustainable mineral material is 14 205:1. The amount of pyrolysis oil used corresponds to 202 g of sustainable ethylene. This is sustainably produced ethylene is reacted fully with 382 g of sodium hypophosphite monohydrate and 500 g of demineralized water at 120°C, 10 bar, with addition of sodium peroxodisulfate additive (processing auxiliary). The product is also reacted with 2200 g of demineralized water and 754 g of aluminium sulfate solution (containing 4.3% Al). The pH is kept between 2 and 7 with a pH modifier, and the temperature between 25 and 100°C. The solids formed are filtered off between 25 and 100°C and washed with 39 to 9000 g of demineralized water between 25 and 100°C. After drying at 60 to 150°C and a pressure of 0.1 to 1 bar for 0.1 to 10 h, 458 g of sustainably produced aluminium diethylphosphinate with 100% by weight of sustainably produced carbon, based on the total mass of the carbon, is obtained. The product has a residual moisture content of 0.1%, an average particle diameter of 28 µm and a bulk density of 510 g/l (98% yield). The aluminium diethylphosphinate thus obtained thus comes from a sustainable origin to an extent of 43% (proportion of the ethylene originating from a sustainable origin to an extent of 100% in the aluminium diethylphosphinate).

## Claims

1. Sustainably produced dialkylphosphinic salts of the formula (I) 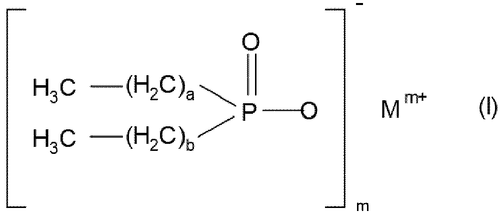 in which
a and b may be the same or different and are each independently 1 to 9, and where the carbon chains may be linear, branched or cyclic, and
M is Mg, Ca, Al, Sb, Sn, Ge, Ti, Fe, Zr, Zn, Ce, Bi, Sr, Mn, Li, Na, K and/or a protonated nitrogen base and
m is 1 to 4,
**characterized in that** the dialkylphosphinic salts have a sustainably produced carbon content of 0.000001% to 100% by weight, based on the total mass of carbon in the compound.

2. Sustainably produced dialkylphosphinic salts according to Claim 1, **characterized in that** the dialkylphosphinic salts have a sustainably produced carbon content of 0.0001% to 100% by weight, based on the total mass of carbon in the compound.

3. Sustainably produced dialkylphosphinic salts according to Claim 1 or 2, **characterized in that** the dialkylphosphinic salts have a sustainably produced carbon content of 0.001% to 100% by weight, based on the total mass of carbon in the compound.

4. Sustainably produced dialkylphosphinic salts according to at least one of Claims 1 to 3, **characterized in that** a and b may be the same or different and are each independently 1 to 5, and where the carbon chains may be linear, branched or cyclic and M is Al, Fe, TiO_{q} with q = 0 to 1.9 or Zn.

5. Sustainably produced dialkylphosphinic salts according to at least one of Claims 1 to 4, **characterized in that** a and b are each 1 and M is Al.

6. Sustainably produced dialkylphosphinic salts according to at least one of Claims 1 to 5, wherein the sustainably produced carbon content of the dialkylphosphinic salts comes from olefins produced from renewable or recycled raw materials.

7. Sustainably produced dialkylphosphinic salts according to Claim 6, **characterized in that** the renewable raw materials are tall oil, tung oil, wood tar, creosote, or vegetable oils such as palm oil, soya oil, rapeseed oil, sunflower oil, palm kernel oil, cottonseed oil, peanut oil, maize kernel oil, coconut oil, olive oil, sesame oil, linseed oil and/or safflower oil.

8. Sustainably produced dialkylphosphinic salts according to Claim 6 or 7, **characterized in that** the renewable raw materials are tall oil.

9. Sustainably produced dialkylphosphinic salts according to Claim 6, **characterized in that** the recycled raw materials are selected from food wastes, residues or wastes from food production, papermaking or pulp processing, and any other materials of recycled origin.

10. Sustainably produced dialkylphosphinic salts according to Claim 9, wherein said recycled raw materials is pyrolysis oil from plastic wastes, for example from used tyres.

11. Process for producing sustainably produced dialkylphosphinic salts of the formula (I), **characterized in that** the starting components converted are an organic component with a phosphorus component and a metal component, where at least one of these starting components contain or have been at least partially produced from renewable or recycled raw materials.

12. Process for producing sustainably produced dialkylphosphinic salts according to Claim 11, **characterized in that** the organic component is an olefin that that is at least partially produced from renewable or recycled raw materials.

13. Process for producing sustainably produced dialkylphosphinic salts according to Claim 11 or 12, **characterized in that** the renewable raw materials are tall oil, tung oil, wood tar, creosote, or vegetable oils such as palm oil, soya oil, rapeseed oil, sunflower oil, palm kernel oil, cottonseed oil, peanut oil, maize kernel oil, coconut oil, olive oil, sesame oil, linseed oil and/or safflower oil.

14. Process for producing sustainably produced dialkylphosphinic salts according to at least one of Claims 11 to 13, **characterized in that** the organic component produced is an olefin in a steamcracker.

15. Process for producing sustainably produced dialkylphosphinic salts according to at least one of Claims 11 to 14, **characterized in that** the production of the organic component involves feeding a substream of renewable raw materials and/or of recycled raw materials into a main stream of conventional raw materials, and using the required amount of sustainably produced organic component from the common product stream for the further process steps.

16. Process for producing sustainably produced dialkylphosphinic salts according to at least one of Claims 11 to 15, **characterized in that** the olefin is produced using a renewable raw material, where this renewable raw material is converted to the olefin together with conventional raw materials, then the required amount of sustainably produced olefin from the common product stream is used for the reaction with derivatives of hypophosphorous acid to give a derivative of the dialkylphosphinic acid, and then this derivative of the dialkylphosphinic acid is reacted with an aluminium salt to give aluminium dialkylphosphinate.

17. Process for producing sustainably produced dialkylphosphinic salts according to at least one of Claims 11 to 14, **characterized in that** the production of the organic component involves feeding a substream of renewable raw materials and/or of recycled raw materials into a main stream of conventional raw materials, and using the common product stream of the organic component for the further process steps.

18. Process for producing sustainably produced dialkylphosphinic salts according to at least one of Claims 11 to 14 and 17, **characterized in that** the olefin is produced using a renewable raw material, where this renewable raw material is converted to the olefin together with conventional raw materials, then the common olefin product stream is used for the reaction with derivatives of hypophosphorous acid to give a derivative of the dialkylphosphinic acid, and then this derivative of the dialkylphosphinic acid is reacted with an aluminium salt to give aluminium dialkylphosphinate.

19. Process according to Claim 16 or 18, **characterized in that** the derivatives of hypophosphorous acid have been produced in a substream process from recycled raw materials and conventional raw materials.

20. Process according to Claim 16 or 18, **characterized in that** the aluminium salt has been produced in a substream process from recycled raw materials and conventional raw materials.

21. Process according to at least one of Claims 16 to 20, **characterized in that** the conventional raw materials originate from petroleum.

22. Process according to at least one of Claims 11 tfo 21, **characterized in that** the olefin is ethylene and the aluminium salt is aluminium sulfate.

23. Use of sustainably produced dialkylphosphinic salts according to at least one of Claims 1 to 9 as intermediate for further syntheses, as synergist, as binder, as crosslinker or accelerator in the curing of epoxy resins, polyurethanes, unsaturated polyester resins, as polymer stabilizers, as crop protection agents, as sequestrants, as mineral oil additive, as anticorrosive, in washing and cleaning composition applications, in electronics applications, in or as flame retardants, as flame retardants for clearcoats and intumescent coatings, in or as flame retardants for wood and other cellulosic products, in or as reactive and/or nonreactive flame retardants for polymers, for production of flame-retardant polymer moulding compounds, for production of flame-retardant polymer mouldings and/or for imparting flame retardancy to polyester and pure cellulose and cellulose blend fabrics by impregnation and/or as synergist in further flame retardant mixtures.

24. Flame-retardant thermoplastic or thermoset polymer moulding compound or polymer mouldings, films, filaments and/or fibres containing 0.1% to 45% by weight of sustainably produced dialkylphosphinic salts according to one or more of Claims 1 to 10, 55% to 99.9% by weight of thermoplastic or thermoset polymer or mixtures thereof, 0% to 55% by weight of additives and 0% to 55% by weight of filler or reinforcing materials, where the sum total of the components is 100% by weight.

25. Flame-retardant thermoplastic or thermoset polymer moulding compound or polymer mouldings, films, filaments and/or fibres containing 1% to 30% by weight of sustainably produced dialkylphosphinic salts according to one or more of Claims 1 to 10, 10% to 97% by weight of thermoplastic or thermoset polymer or mixtures thereof, 1% to 30% by weight of additives and 1% to 30% by weight of filler or reinforcing materials, where the sum total of the components is 100% by weight.

26. Flame-retardant thermoplastic or thermoset polymer moulding compound or polymer mouldings, films, filaments and/or fibres containing sustainably produced dialkylphosphinic salts according to one or more of Claims 1 to 10, **characterized in that** the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/ acrylonitrile-butadiene-styrene) or PPE/HIPS (polyphenylene ether/HI polystyrene) polymer type, and/or thermoset polymers of the unsaturated polyester or epoxy resin type.
